# EUROPEAN PATENT APPLICATION

(11) **EP 4 471 901 A1**
(43) Date of publication of application: **04.12.2024**
(21) Application number: 23746641.2
(22) Date of filing: 11.01.2023
(51) Int. Cl.: H01M 4/40, H01M 4/134, H01M 4/1395, H01M 4/38, H01M 4/66, H01M 10/052, H01M 10/0562, H01M 10/0569

(54) **BATTERY AND METHOD FOR PRODUCING ELECTRODE**

(30) Priority: 25.01.2022 JP 2022009699
(71) Applicant: Panasonic Intellectual Property Management Co., Ltd., Kadoma-shi, Osaka 571-0057 (JP)
(72) Inventor: OTO, Takashi, Kadoma-shi, Osaka 571-0057 (JP); FUJIMOTO, Masahisa, Kadoma-shi, Osaka 571-0057 (JP)
(74) Representative: Novagraaf International SA
(86) International application number: PCT/JP2023/000409
(87) International publication number: WO 2023/145426

(57) **Abstract**

A battery 1000 according to the present disclosure includes a first electrode 101, a second electrode 103, and an electrolyte layer 102 positioned between the first electrode 101 and the second electrode 103. The first electrode 101 includes a current collector 100 and an active material layer 104 positioned between the current collector 100 and the electrolyte layer 102. The active material layer 104 includes an alloy, and the alloy includes Bi and Mn. A method for producing an electrode according to the present disclosure includes: forming a plating layer on a current collector by electroplating, the plating layer including a Bi plating film and a Mn plating film; and heating the current collector and the plating layer to obtain an electrode in which an active material layer including an alloy is formed on the current collector, the alloy including Bi and Mn.

## Description

### TECHNICAL FIELD

The present disclosure relates to a battery and a method for producing an electrode.

### BACKGROUND ART

Lithium secondary batteries, which have been actively researched and developed in recent years, have battery characteristics greatly affected by the electrodes used therein, such as charge and discharge voltage, charge and discharge cycle life characteristics, and storage characteristics. Thus, attempts have been made to enhance the battery characteristics by modifying the electrode active materials.

For example, proposals have been made from the early days for lithium secondary batteries using, as the electrodes, aluminum, silicon, tin, or the like that is electrochemically alloyed with lithium during charge. Patent Literature 1 discloses a lithium secondary battery including: a negative electrode including a negative electrode material consisting of an alloy including silicon, tin, and a transition metal; a positive electrode; and an electrolyte.

Patent Literature 2 discloses a lithium secondary battery including: a negative electrode using, as the active material, a silicon thin film formed on a current collector; a positive electrode; and an electrolyte.

Another example of the metal that can be alloyed with lithium is bismuth (Bi). Non Patent Literature 1 discloses a negative electrode produced by using a Bi powder in which Bi is included as the negative electrode active material.

### CITATION LIST

### Patent Literature

Patent Literature 1: JP 4898737 B
Patent Literature 2: JP 3733065 B

### Non Patent Literature

Non Patent Literature 1: YAMAGUCHI Hiroyuki, "Amorphous Polymeric Anode Materials from Poly(acrylic acid) and Metal Oxide for Lithium Ion Batteries", Doctoral dissertation, Mie University, 2015.

### SUMMARY OF INVENTION

### Technical Problem

The present disclosure provides a battery having an improved energy efficiency.

### Solution to Problem

A battery of the present disclosure includes:
a first electrode;
a second electrode; and
an electrolyte layer positioned between the first electrode and the second electrode, wherein
the first electrode includes:
   a current collector; and
   an active material layer positioned between the current collector and the electrolyte layer, and
the active material layer includes an alloy, the alloy including Bi and Mn.

### Advantageous Effects of Invention

According to the present disclosure, it is possible to provide a battery having an improved energy efficiency.

### BRIEF DESCRIPTION OF DRAWINGS

FIG. 1 is a cross-sectional view schematically showing a configuration example of a battery according to an embodiment of the present disclosure.
FIG. 2 is a cross-sectional view schematically showing a modification of the battery according to the embodiment of the present disclosure.
FIG. 3 is a graph showing, for a first electrode of a battery according to Example 1, the X-ray diffraction patterns of the active material layer in the initial state, after charge, and after charge and discharge.
FIG. 4 is a graph showing the results of a charge and discharge test on the battery according to Example 1.
FIG. 5 is a graph showing the results of a charge and discharge test on a battery according to Example 2.
FIG. 6 is a graph showing the results of a charge and discharge test on a battery according to Example 3.
FIG. 7 is a graph showing, for a first electrode of a battery according to Example 4, the X-ray diffraction patterns of the active material layer in the initial state, after charge, and after charge and discharge.
FIG. 8 is a graph showing the results of a charge and discharge test on the battery according to Example 4.
FIG. 9 is a graph showing the results of a charge and discharge test on a battery according to Example 5.
FIG. 10 is a graph showing the results of a charge and discharge test on a battery according to Example 6.
FIG. 11 is a graph showing the results of a charge and discharge test on a battery according to Reference Example 1.
FIG. 12 is a graph showing the results of a charge and discharge test on a battery according to Reference Example 2.
FIG. 13 is a graph showing the results of a charge and discharge test on a battery according to Reference Example 3.

### DESCRIPTION OF EMBODIMENT

### (Findings underlying the present disclosure)

As described in BACKGROUND ART section, attempts have been made to enhance the battery characteristics of lithium secondary batteries by modifying the electrode active materials.

Using lithium metal as the negative electrode active material can obtain a lithium secondary battery having a high energy density both per weight and per volume. However, in a lithium secondary battery having such a configuration, lithium is deposited in the form of dendrites during charge. The lithium metal deposited partially reacts with the electrolyte solution, causing a low charge and discharge efficiency and thus poor cycle characteristics.

To address this issue, using carbon, particularly graphite, as the negative electrode has been proposed. In a negative electrode using carbon, charge and discharge occur by lithium intercalation into and deintercalation from carbon. In a negative electrode having such a configuration, the charge and discharge mechanism causes no deposition of lithium metal in the form of dendrites. In addition, a lithium secondary battery employing a negative electrode having such a configuration involves topotactic reactions and thus is extremely excellent in reversibility, exhibiting nearly 100% charge and discharge efficiency. For these reasons, lithium secondary batteries employing negative electrodes using carbon, particularly graphite, have been put to practical use. However, graphite has a theoretical capacity density of 372 mAh/g, which is about one-tenth of the theoretical capacity density of lithium metal, 3884 mAh/g. Consequently, in negative electrodes using graphite, the active material has a low capacity density. Furthermore, since the actual capacity density of graphite has almost reached the theoretical capacity density of graphite, the capacity increase of negative electrodes using graphite has been pushed to the limit.

To address these, proposals have been made from the early days for lithium secondary batteries using, as the electrodes, aluminum, silicon, tin, or the like that is electrochemically alloyed with lithium during charge. The metal to be alloyed with lithium has a considerably higher capacity density than graphite has. Silicon particularly has a high theoretical capacity density. Thus, electrodes using aluminum, silicon, tin, or the like that can be alloyed with lithium are promising as high-capacity negative electrodes for batteries, and various types of secondary batteries using such negative electrodes have been proposed (Patent Literature 1).

However, a negative electrode using a metal such as the above that can be alloyed with lithium expands upon occluding lithium and contracts upon releasing lithium. Repeating such expansion and contraction during charge and discharge causes pulverization of the alloy itself serving as the electrode active material caused by the charge and discharge, deteriorating the current collection characteristics of the negative electrode. Consequently, sufficient cycle characteristics have not been exhibited. To address such a drawback, several experiments as below have been made. According to one experiment, for example, on a current collector having a roughened surface, silicon is deposited by sputtering or vapor deposition or tin is deposited by electroplating (Patent Literature 2). In this experiment, the active material, that is, the metal that can be alloyed with lithium, in the form of a thin film, adheres to the current collector, causing little degradation in current collection characteristics despite repeated expansion and contraction of the negative electrode caused by lithium occlusion and release.

However, forming an active material by sputtering or vapor deposition as above results in high manufacturing costs, making this approach impractical. Although forming an active material by electroplating, which is less costly in manufacturing, is practical, silicon is extremely difficult to use for electroplating. Moreover, tin, which is easy to use for electroplating, has an issue of a poor flatness of the discharge voltage and thus difficulty in using as the battery electrode.

Another example of the metal that can be alloyed with lithium is bismuth (Bi). Bi, together with lithium (Li), forms compounds LiBi and LisBi. LiBi and LisBi have almost no difference in potential. In contrast, tin, which has a poor flatness of the discharge voltage, forms several compounds together with lithium. These compounds considerably differ in potential from each other. In other words, unlike tin, Bi does not have properties of forming, together with lithium, multiple compounds that greatly differ in potential from each other. For this reason, an electrode including Bi as the active material has a flat potential and thus is excellent in flatness of the discharge voltage. Thus, an electrode including Bi as the active material is considered to be suitable as the battery electrode.

However, Bi, which is poor in malleability and ductility, has difficulty in manufacturing in the form of a metal plate or metal foil, and consequently can be obtained in the form of a pellet or powder. Thus, studies on an electrode including Bi as the active material have focused on an electrode manufactured by applying a Bi powder to a current collector. However, such an electrode manufactured by using a Bi powder undergoes pulverization caused by repeated charge and discharge, deteriorating the current collection characteristics. Consequently, sufficient cycle characteristics have not been exhibited. For example, Non Patent Literature 1 discloses production of an electrode including Bi as the active material in which a Bi powder is used and polyvinylidene fluoride (PVdF) or polyimide (PI) is used as the binder. In Non Patent Literature 1, a battery produced by using the above electrode is charged and discharged. However, the electrode produced exhibits extremely poor results in both the initial charge and discharge curves and the cycle characteristics. Although measured at a considerably low rate equivalent to 0.042 IT, the battery exhibits a low initial charge and discharge efficiency and a severe cycle degradation in addition, and is accordingly not suitable for practical use. Regarding this cycle degradation, Non Patent Literature 1 points out as follows: as the Bi active material expands during Li intercalation and contracts during Li deintercalation, the active material becomes pulverized, presumably causing no more formation of the electron conduction paths and thus causing a capacity decrease.

The present inventors have focused on Bi, which, as described above, does not have properties of forming, together with Li, multiple compounds greatly different in potential and thus is excellent in flatness of the discharge voltage, and the present inventors have conducted earnest studies on a battery that can have improved cycle characteristics. As a result, the present inventors have arrived at a novel technical idea of using an alloy including Bi and Mn as the active material.

### (Outline of one aspect according to the present disclosure)

A battery according to a first aspect of the present disclosure includes:
a first electrode;
a second electrode; and
a solid electrolyte layer positioned between the first electrode and the second electrode, wherein
the first electrode includes:
   a current collector; and
   an active material layer positioned between the current collector and the electrolyte layer, and
the active material layer includes an alloy, the alloy including Bi and Mn.

The battery according to the first aspect can have an improved energy efficiency by including an electrode in which an active material layer including an alloy including Bi and Mn is included.

In a second aspect of the present disclosure, for example, the battery according to the first aspect may be such that the active material layer includes at least one selected from the group consisting of LiBi and LisBi.

The battery according to the second aspect can have a further improved energy efficiency.

In a third aspect of the present disclosure, for example, the battery according to the first or second aspect may be such that the active material layer includes BiMn as an active material.

The battery according to the third aspect can have a further improved energy efficiency.

In a fourth aspect of the present disclosure, for example, the battery according to the third aspect may be such that the BiMn has a crystal structure of space group P63/mmc.

The battery according to the fourth aspect can have a further improved energy efficiency.

In a fifth aspect of the present disclosure, for example, the battery according to any one of the first to fourth aspects may be such that the active material layer includes Bi₄Cu₄Mn₃ as an active material.

The battery according to the fifth aspect can have a further improved energy efficiency.

In a sixth aspect of the present disclosure, for example, the battery according to the fifth aspect may be such that the Bi₄Cu₄Mn₃ has a crystal structure of space group Fm-3m.

The battery according to the sixth aspect can have a further improved energy efficiency.

In a seventh aspect of the present disclosure, for example, the battery according to any one of the first to sixth aspects may be such that the active material layer is free of a solid electrolyte.

The battery according to the seventh aspect can have an enhanced capacity per volume owing to the active material layer free of a solid electrolyte. According to the seventh aspect, it is therefore possible to provide a battery having an enhanced capacity per volume and an improved energy efficiency.

In an eighth aspect of the present disclosure, for example, the battery according to any one of the first to seventh aspects may be such that the current collector includes Cu.

In the battery according to the eighth aspect, owing to the current collector including Cu, it is possible to easily form an active material layer 104 in which an alloy including Bi, Mn, and Cu, such as Bi₄Mn₃Cu₄ is included, by, for example, using the current collector as the substrate and forming, on the substrate, a Bi plating film and a Mn plating film on top of each other, followed by heat treatment. According to the eighth aspect, it is therefore possible to easily provide a battery having a configuration suitable for improving energy efficiency.

In a ninth aspect of the present disclosure, for example, the battery according to any one of the first to eighth aspects may be such that the active material layer is a heat-treated plating layer.

The battery according to the ninth aspect can have an enhanced capacity per volume owing to the active material layer being a heat-treated plating layer. According to the ninth aspect, it is therefore possible to provide a battery having an enhanced capacity per volume and an improved energy efficiency.

In a tenth aspect of the present disclosure, for example, the battery according to any one of the first to ninth aspects may be such that the electrolyte layer includes an electrolyte solution.

The battery according to the tenth aspect can have favorable cycle characteristics in addition to an improved energy efficiency.

In an eleventh aspect of the present disclosure, for example, the battery according to the tenth aspect may be such that the electrolyte solution includes vinylene carbonate as a solvent.

The battery according to the eleventh aspect can have favorable cycle characteristics in addition to an improved energy efficiency.

In a twelfth aspect of the present disclosure, for example, the battery according to any one of the first to ninth aspects may be such that the electrolyte layer is a solid electrolyte layer.

The battery according to the twelfth aspect can have favorable cycle characteristics in addition to an improved energy efficiency.

In a thirteenth aspect of the present disclosure, for example, the battery according to the twelfth aspect may be such that the solid electrolyte layer includes a halide solid electrolyte, and the halide solid electrolyte is free of sulfur.

The battery according to the thirteenth aspect can have favorable cycle characteristics in addition to an improved energy efficiency.

In a fourteenth aspect of the present disclosure, for example, the battery according to the twelfth aspect may be such that the solid electrolyte layer includes a sulfide solid electrolyte.

The battery according to the fourteenth aspect can have favorable cycle characteristics in addition to an improved energy efficiency.

In a fifteenth aspect of the present disclosure, for example, the battery according to any one of the first to fourteenth aspects may be such that the first electrode is a negative electrode, and the second electrode is a positive electrode.

The battery according to the fifteenth aspect can have an improved energy efficiency.

A method for producing an electrode according to a sixteenth aspect of the present disclosure includes:
forming a plating layer on a current collector by electroplating, the plating layer including a Bi plating film and a Mn plating film; and
heating the current collector and the plating layer to obtain an electrode in which an active material layer including an alloy is formed on the current collector, the alloy including Bi and Mn.

According to the method according to the sixteenth aspect, it is possible to easily produce an electrode that can improve battery energy efficiency.

In a seventeenth aspect of the present disclosure, for example, the method according to the sixteenth aspect may be such that the current collector includes Cu.

According to the method according to the seventeenth aspect, it is possible to easily produce an electrode that can improve battery energy efficiency.

### (Embodiment of the present disclosure)

An embodiment of the present disclosure will be described below with reference to the drawings. The following descriptions are each a generic or specific example.

The numerical values, composition, shape, film thickness, electrical characteristics, secondary battery structure, etc., shown below are illustrative only, and are not intended to limit the present disclosure.

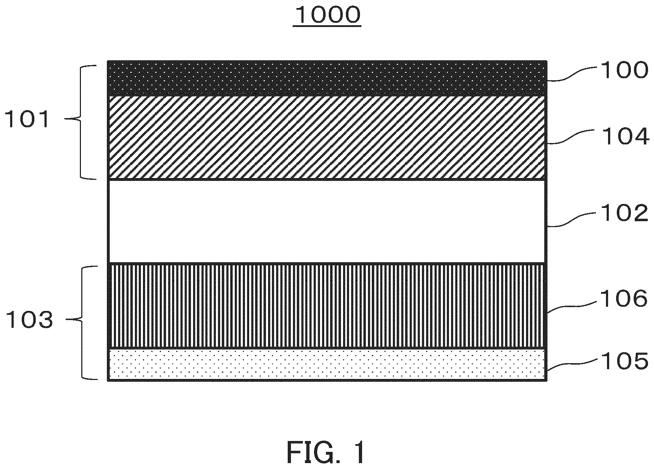

FIG. 1 is a cross-sectional view schematically showing a configuration example of a battery 1000 according to the embodiment of the present disclosure.

The battery 1000 includes a first electrode 101, a second electrode 103, and an electrolyte layer 102 positioned between the first electrode 101 and the second electrode 103. The first electrode 101 includes a current collector 100 and an active material layer 104 positioned between the current collector 100 and the electrolyte layer 102. The active material layer 104 includes an alloy, and the alloy includes Bi and Mn.

The battery 1000 includes the first electrode 101 that includes the active material layer 104 in which an alloy including Bi and Mn is included as the active material. With this configuration, the battery 1000 can have an improved energy efficiency. Here, battery energy efficiency specifically refers to a value calculated by "discharge power amount (Wh) × 100/charge power amount (Wh)". In energy efficiency evaluation using half-cells, that is, single-electrode evaluation, a small potential difference (ΔV) between the charge reaction potential and the discharge reaction potential is regarded herein as high energy efficiency. The potential difference between the charge reaction potential and the discharge reaction potential is evaluated from the potential of a flat portion of the charge reaction potential and the potential of a flat portion of the discharge reaction potential.

As shown in FIG. 1, the second electrode 103 may include a current collector 105 and an active material layer 106.

In the battery 1000, the electrolyte layer 102 is a solid electrolyte layer. Accordingly, although charge and discharge cause repeated expansion and contraction of the active material layer 104 including the alloy including Bi and Mn as the active material, no electrolyte solution including an electrolyte enters the active material layer 104. This suppresses a decrease in the electron conduction paths in the active material layer 104 caused by repeated charge and discharge. Accordingly, the battery 1000 is less prone to degradation in the current collection characteristics of the active material layer 104 caused by charge and discharge, and therefore can have favorable cycle characteristics.

The battery 1000 is, for example, a lithium secondary battery. The following describes an example case where the metal ions that are occluded and released by the active material layer 106 of the first electrode 101 and the second electrode 103 during charge and discharge of the battery 1000 are lithium ions.

As described above, the active material layer 104 includes an alloy including Bi and Mn. The alloy including Bi and Mn may be, for example, an intermetallic compound.

The alloy including Bi and Mn may be, for example, BiMn. In other words, the active material layer 104 may include BiMn as the active material.

With the above configuration, the battery 1000 can have a further improved energy efficiency.

BiMn that may be included in the active material layer 104 may have a crystal structure of space group P63/mmc.

The alloy including Bi and Mn may be, for example, Bi₄Cu₄Mn₃. In other words, the active material layer 104 may include Bi₄Cu₄Mn₃ as the active material.

With the above configuration, the battery 1000 can have a further improved energy efficiency.

Bi₄Cu₄Mn₃ that may be included in the active material layer 104 may have a crystal structure of space group Fm-3m.

With the above configuration, the battery 1000 can have a further improved energy efficiency.

The active material layer 104 may include an alloy including Bi and Mn as the main component. Here, the phrase "the active material layer 104 includes an alloy including Bi and Mn as the main component" is defined as meaning that "the content of the alloy including Bi and Mn in the active material layer 104 is 50 mass% or more". The content of the alloy including Bi and Mn in the active material layer 104 can be determined by, for example: performing elemental analysis by energy dispersive X-ray spectroscopy (EDX) to confirm that Bi and Mn are included in the active material layer 104; and performing Rietveld analysis on the X-ray diffraction results for the active material layer 104 to calculate the proportion of the compound included therein (namely, compound including Bi and Mn as the constituent elements). The above "compound including Bi and Mn as the constituent elements" is, for example, BiMn or Bi₄Cu₄Mn₃. In the case where the active material layer 104 includes multiple compounds as the alloy including Bi and Mn, the total content of these compounds is the content of the alloy including Bi and Mn in the active material layer 104.

With the above configuration, the battery 1000 can have a further improved energy efficiency.

The active material layer 104 including an alloy including Bi and Mn may be constituted of, for example, an alloy including Bi and Mn in the form of a thin film (hereinafter referred to as a "thin film of an alloy including Bi and Mn"). The alloy including Bi and Mn in the form of a thin film may be, for example, BiMn or Bi₄Mn₃Cu₄ in the form of a thin film.

With the above configuration, the battery 1000 can have a further improved energy efficiency.

The active material layer 104 including an alloy including Bi and Mn can be formed by, for example, electroplating. The method for producing the first electrode 101 by forming the active material layer 104 by electroplating is, for example, as follows.

First, a substrate for electroplating is prepared. In the first electrode 101, the current collector 100 serves as the substrate, for example. The current collector 100 prepared is, for example, a current collector including Cu. The method for producing the first electrode 101 includes, for example:
forming a plating layer on a current collector by electroplating, the plating layer including a Bi plating film and a Mn plating film; and
heating the current collector and the plating layer to obtain an electrode in which an active material layer including an alloy is formed on the current collector, the alloy including Bi and Mn.

The above plating layer may be formed by, for example, first forming a Bi plating film and then forming a Mn plating film thereon. The formation order for a Bi plating film and a Mn plating film is not limited to this. For example, the above plating layer may be formed by, for example, first forming a Mn plating film and then forming a Bi plating film thereon.

In the above production method, the heating of the current collector and the plating layer causes, for example, Mn included in the Mn plating film or Mn included in the Mn plating film and Cu included in the current collector to diffuse into the Bi plating film. Thus, it is possible to form, on the current collector, an active material layer in which an alloy including Bi and Mn, such as BiMn or Bi₄Mn₃Cu₄, is included.

The heating temperature for the plating layer may be, for example, 150°C or higher and 400°C or lower.

The method for manufacturing the first electrode 101 will now be described in more detail.

First, a substrate for electroplating is prepared. In the first electrode 101, the current collector 100 serves as the substrate, for example. The current collector 100 prepared is, for example, a copper foil. The copper foil is preliminarily degreased with an organic solvent, and then degreased by being immersed in an acidic solvent with its one side masked. Thus, the surface of the copper foil is activated. The copper foil activated is connected to a power supply for current application. The copper foil connected to the power supply is immersed in a bismuth plating bath. The bismuth plating bath used is, for example, an organic acid bath containing Bi³⁺ ions and an organic acid. Subsequently, electrical current is applied to the copper foil with controlled current density and application time, so that the unmasked surface of the copper foil is electroplated with Bi. Following the electroplating, the copper foil is taken out from the plating bath, and the mask is removed. The copper foil is then cleaned with pure water and dried. Through these steps, a Bi plating film is formed on the surface of the copper foil. The bismuth plating bath used in forming the Bi plating film is not particularly limited, and can be appropriately selected from known bismuth plating baths capable of depositing a thin film made of a simple substance of Bi. For the bismuth plating bath, the organic acid bath can be an organic sulfonic acid bath, a gluconic acid and ethylenediaminetetraacetic acid (EDTA) bath, or a citric acid and EDTA bath. Furthermore, the bismuth plating bath may be, for example, a sulfuric acid bath. Moreover, an additive may be added to the bismuth plating bath.

Next, the copper foil with the Bi plating film formed thereon is subjected to further masking on the side with the Bi plating film not formed, and is connected to a power supply for current application. The copper foil connected to the power supply is immersed in a manganese plating bath. The manganese plating bath used is, for example, a sulfuric acid bath containing Mn²⁺ ions and sulfuric acid. Subsequently, electrical current is applied to the copper foil with controlled current density and application time, so that the unmasked surface of the Bi plating film is electroplated with Mn. Following the electroplating, the Mn-plated copper foil is taken out from the plating bath, and the mask is removed. The Mn-plated copper foil is then cleaned with pure water and dried. Through these steps, on the Bi plating film formed on the copper foil, a Mn plating film is formed. The manganese plating bath used in forming the Mn plating film is not particularly limited, and can be appropriately selected from known manganese plating baths capable of depositing a thin film made of a simple substance of Mn. In the case where the manganese plating bath selected is, for example, a sulfate bath, an example of the plating bath can be one prepared by adding manganese sulfate as the soluble manganese salt to a 1.0 mol/L aqueous solution of ammonium sulfate up to a Mn²⁺ ion concentration of 0.92 mol/L. Furthermore, an additive, for example, may be added to the manganese plating bath.

The current density of current applied for electroplating is not particularly limited, and may be set as appropriate in view of, for example, the plating bath to be used or the material for the current collector to be used as the substrate.

Next, the copper foil and the plating layer (i.e., Bi plating film and Mn plating film) formed on the copper foil are heated. This heat treatment causes solid-phase diffusion of Mn from the Mn plating film into the Bi plating film, and furthermore of Cu from the copper foil into the Bi plating film, so that the active material layer 104 constituted of a thin film of an alloy including Bi and Mn can be produced. A copper foil is electroplated with a Bi plating film and a Mn plating film. A stack thus obtained, which is composed of the copper foil, the Bi plating film, and the Mn plating film, is heat-treated, for example, at a temperature of 150°C or higher for 30 minutes or longer and shorter than 100 hours in a non-oxidizing atmosphere, so that solid-phase diffusion of Mn from the Mn plating film into the Bi plating film, and furthermore of Cu from the copper foil into the Bi plating film. Thus, the active material layer 104 constituted of, for example, a BiMn thin film or a Bi₄Mn₃Cu₄ thin film can be produced.

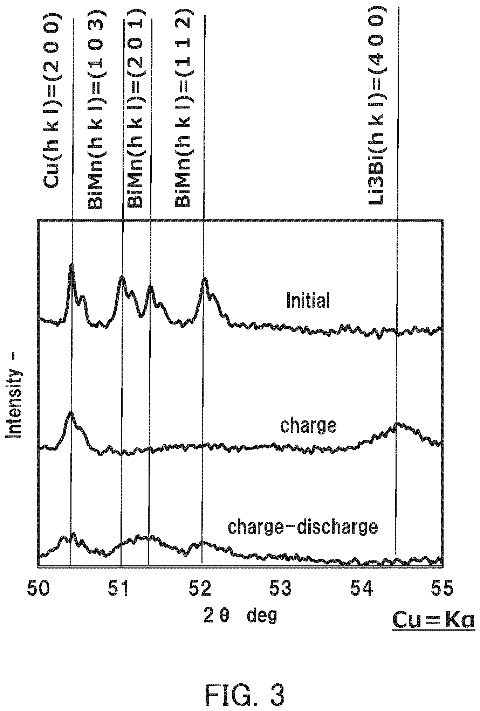

For example, a copper foil was electroplated with bismuth while the thickness was targeted for 3 µm, and the bismuth-electroplated copper foil obtained was further electroplated with manganese while the thickness was targeted for 1 µm. A sample thus obtained was heat-treated at a temperature of 200°C for 100 hours in an argon atmosphere. Thus, an active material layer constituted of a thin film including BiMn was produced. Furthermore, the active material layer produced, which was constituted of a thin film including BiMn, was also subjected to surface structural analysis by surface X-ray diffractometry. The X-ray diffractometry was performed on the surface of the active material layer, that is, the thickness direction of the active material layer, by a θ-2θ method using Cu-Kα radiation having wavelengths of 1.5405 Å and 1.5444 Å as X-rays with an X-ray diffractometer (MiniFlex manufactured by Rigaku Corporation). The X-ray diffraction pattern thus obtained is identical to the X-ray diffraction pattern of the first electrode produced in Example 1 later described, and corresponds to the X-ray diffraction pattern represented by "Initial" among the X-ray diffraction patterns shown in FIG. 3. The phases of BiMn having a crystal structure of space group P63/mmc and Cu included in the Cu foil serving as the current collector and in the active material layer were identified.

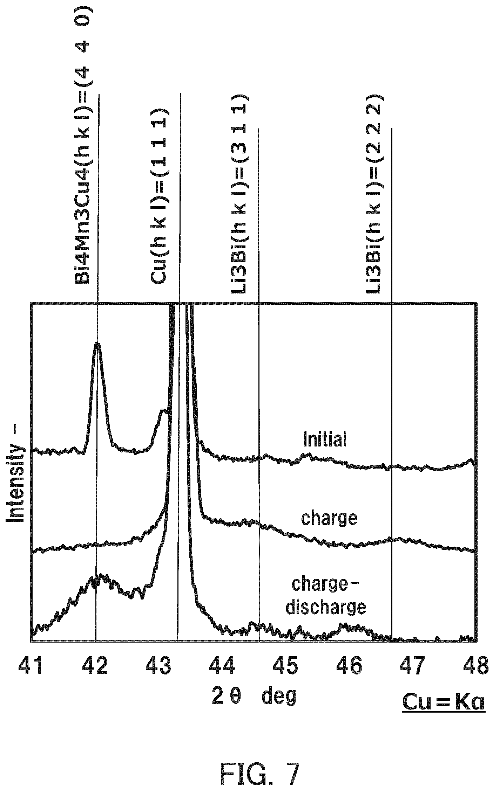

Similarly, a copper foil was electroplated with bismuth while the thickness was targeted for 4 µm, and the bismuth-electroplated copper foil obtained was further electroplated with manganese while the thickness was targeted for 1 µm. A sample thus obtained was heat-treated at a temperature of 200°C for 100 hours in an argon atmosphere. Thus, an active material layer constituted of a thin film including Bi₄Mn₃Cu₄ was produced. Furthermore, the active material layer produced, which was constituted of a thin film including Bi₄Mn₃Cu₄, was also subjected to surface structural analysis by surface X-ray diffractometry. The X-ray diffractometry was performed on the surface of the active material layer, that is, the thickness direction of the active material layer, by a θ-2θ method using Cu-Kα radiation having wavelengths of 1.5405 Å and 1.5444 Å as X-rays with an X-ray diffractometer (MiniFlex manufactured by Rigaku Corporation). The X-ray diffraction pattern thus obtained is identical to the X-ray diffraction pattern of the first electrode produced in Example 4 later described, and corresponds to the X-ray diffraction pattern represented by "Initial" among the X-ray diffraction patterns shown in FIG. 7. The phases of Bi₄Mn₃Cu₄ having a crystal structure of space group Fm-3m and the Cu foil serving as the current collector were identified.

In the case where the active material layer 104 is a heat-treated plating layer formed by such a method as above, the active material layer 104 can have a high density as below, for example. In the case where, for example, the active material layer 104 is constituted of a BiMn thin film produced by the above plating method, the active material layer 104 can have a density of, for example, 5.8 g/cm³ or more and 9.44 g/cm³ or less, and can also have a density of 7.2 g/cm³ or more and 9.44 g/cm³ or less. In the case where, for example, the active material layer 104 is constituted of a Bi₄Mn₃Cu₄ thin film produced by the above plating method, the active material layer 104 can have a density of, for example, 5.8 g/cm³ or more and 9.51 g/cm³ or less, and can also have a density of 7.2 g/cm³ or more and 9.51 g/cm³ or less.

The constituent elements of the battery 1000 according to the present embodiment will be described in more detail below, with use of an example case where the first electrode 101 is the negative electrode and the second electrode 103 is the positive electrode.

### [First electrode]

The first electrode 101 includes the current collector 100 and the active material layer 104, as described above. The active material layer 104 is configured as described above. The first electrode 101 serves as the negative electrode. Thus, the active material layer 104 includes a negative electrode active material having properties of occluding and releasing lithium ions. The active material layer 104 includes an alloy including Bi and Mn. The alloy including Bi and Mn is, for example, BiMn having a crystal structure of space group P63/mmc or Bi₄Mn₃Cu₄ having a crystal structure of space group Fm-3m. BiMn and Bi₄Mn₃Cu₄ each serve as the negative electrode active material.

Bi is a metal element that can be alloyed with lithium. In contrast, Mn and Cu cannot be alloyed with lithium. Accordingly, an alloy including Bi and Mn and an alloy including Bi, Mn, and Cu each have a reduced load on the crystal structure of the negative electrode active material in deintercalation and intercalation of lithium atoms during charge and discharge, presumably suppressing a decrease in the capacity retention rate of the battery. In the case where, for example, BiMn serves as the negative electrode active material, Bi occludes lithium and thus forms an alloy with lithium during charge. In other words, during charge of the battery 1000, a lithium-bismuth alloy is generated in the active material layer 104. The lithium-bismuth alloy generated includes, for example, at least one selected from the group consisting of LiBi and LisBi. In other words, during charge of the battery 1000, the active material layer 104 includes, for example, at least one selected from the group consisting of LiBi and LisBi. During discharge of the battery 1000, the lithium-bismuth alloy releases lithium and thus returns to BiMn.

During charge and discharge of the battery 1000, BiMn serving as the negative electrode active material undergoes the following reactions, for example. The following reaction examples are those for the case where the lithium-bismuth alloy to be generated during charge is LisBi.
Charge: BiMn+3Li⁺+3e⁻→Li₃Bi+Ni
Discharge: Li₃Bi+Mn→BiMn+3Li⁺+3e⁻

The active material layer 104 may include substantially only BiMn as the active material. In this case, the battery 1000 can have an enhanced capacity and improved cycle characteristics in addition to an improved energy efficiency. The phrase "the active material layer 104 includes substantially only BiMn as the active material" means that, for example, the content of the active material in the active material layer 104 except for BiMn is 1 mass% or less. The active material layer 104 may include only BiMn as the active material.

In the case where, for example, Bi₄Mn₃Cu₄ serves as the negative electrode active material, Bi occludes lithium and thus forms an alloy with lithium during charge. In other words, during charge of the battery 1000, a lithium-bismuth alloy is generated in the active material layer 104. The lithium-bismuth alloy generated includes, for example, at least one selected from the group consisting of LiBi and LisBi. In other words, during charge of the battery 1000, the active material layer 104 includes, for example, at least one selected from the group consisting of LiBi and LisBi. During discharge of the battery 1000, the lithium-bismuth alloy releases lithium and thus returns to Bi₄Mn₃Cu₄.

During charge and discharge of the battery 1000, Bi₄Mn₃Cu₄ serving as the negative electrode active material undergoes the following reactions, for example. The following reaction examples are those for the case where the lithium-bismuth alloy to be generated during charge is LisBi.
Charge: Bi₄Mn₃Cu₄+12Li⁺+12e→4Li₃Bi+3Mn+4Cu
Discharge: 4Li₃Bi+3Mn+4Cu→Bi₄Mn₃Cu₄+12Li+⁺12e⁻

The active material layer 104 may include substantially only Bi₄Mn₃Cu₄ as the active material. In this case, the battery 1000 can have an enhanced capacity and improved cycle characteristics in addition to an improved energy efficiency. The phrase "the active material layer 104 includes substantially only Bi₄Mn₃Cu₄ as the active material" means that, for example, the content of the active material in the active material layer 104 except for Bi₄Mn₃Cu₄ is 1 mass% or less. The active material layer 104 may include only Bi₄Mn₃Cu₄ as the active material.

The active material layer 104 may be free of a solid electrolyte. For example, the active material layer 104 may be a layer consisting of an alloy including Bi and Mn and/or a lithium-bismuth alloy that is generated during charge. The alloy including Bi and Mn may be at least one selected from the group consisting of BiMn and Bi₄Mn₃Cu₄.

The active material layer 104 may be disposed in direct contact with the surface of the current collector 100.

The active material layer 104 may be in the form of a thin film.

The active material layer 104 may be a heat-treated plating layer. The active material layer 104 may be a heat-treated plating layer provided in direct contact with the surface of the current collector 100. In other words, the active material layer 104 may be a layer formed as described above by heat-treating a Bi plating film formed on the current collector 100 and a Mn plating film formed on the Bi plating film. The current collector 100 may include, for example, Cu.

In the case where the active material layer 104 is a heat-treated plating layer provided in direct contact with the surface of the current collector 100, the active material layer 104 firmly adheres to the current collector 100. It is accordingly possible to further suppress degradation in the current collection characteristics of the first electrode 101 caused by repeated expansion and contraction of the active material layer 104. This further improves the cycle characteristics of the battery 1000. Furthermore, in the case where the active material layer 104 is a heat-treated plating layer, it is also possible to achieve a further enhanced capacity owing to Bi, which can be alloyed with lithium, included at a high density in the active material layer 104.

The active material layer 104 may include a material other than the alloy including Bi and Mn.

The active material layer 104 may further include a conductive material.

Examples of the conductive material include a carbon material, a metal, an inorganic compound, and a conductive polymer. Examples of the carbon material include graphite, acetylene black, carbon black, Ketjenblack, a carbon whisker, needle coke, and a carbon fiber. Examples of the graphite include natural graphite and artificial graphite. Examples of the natural graphite include vein graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used alone or in mixture.

The active material layer 104 may further include a binder.

Examples of the binder include a fluorine-containing resin, a thermoplastic resin, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used alone or in mixture.

The thickness of the active material layer 104 is not particularly limited, and may be 1 µm or more and 100 µm or less, for example.

The material for the current collector 100 is, for example, a simple substance of metal or an alloy. More specifically, the material for the current collector 100 may be a simple substance of metal including, or an alloy including, at least one selected from the group consisting of copper, chromium, nickel, titanium, platinum, gold, aluminum, tungsten, iron, and molybdenum. The material for the current collector 100 may be stainless steel.

The current collector 100 may include copper (Cu). In the case where the current collector 100 includes copper Cu, it is possible to easily form the active material layer 104 in which alloy including Bi, Mn, and Cu, such as Bi₄Mn₃Cu₄ is included, by using the current collector 100 as the substrate and forming, on the substrate, a Bi plating film and a Mn plating film on top of each other, followed by heat treatment.

The current collector 100 may be a multilayer film.

### [Electrolyte layer]

The electrolyte layer 102 includes an electrolyte material. The electrolyte layer 102 is made of, for example, a nonaqueous electrolyte. The electrolyte material included in the electrolyte layer 102 may be a solid electrolyte, or may include an electrolyte solution. In the configuration example in FIG. 1, the electrolyte material included in the electrolyte layer 102 is a solid electrolyte.

In the case where the electrolyte material is a solid electrolyte, the solid electrolyte may be a halide solid electrolyte, a sulfide solid electrolyte, an oxide solid electrolyte, a polymer solid electrolyte, or a complex hydride solid electrolyte.

The halide solid electrolyte refers to a solid electrolyte including a halogen element. The halide solid electrolyte, which includes the halogen element, may further include oxygen. The halide solid electrolyte is free of sulfur (S).

The halide solid electrolyte may be, for example, a material represented by the following composition formula (1):

LiₐM_{β}X_{γ} Formula (1)

in the composition formula (1), α, β, and γ are each a value greater than 0, M is at least one selected from the group consisting of metalloid elements and metal elements other than Li, and X is at least one selected from the group consisting of F, Cl, Br, and I.

The "metalloid elements" refer to B, Si, Ge, As, Sb, and Te.

The "metal elements" refer to all the elements included in Groups 1 to 12 of the periodic table except hydrogen and all the elements included in Groups 13 to 16 of the periodic table except B, Si, Ge, As, Sb, Te, C, N, P, O, S, and Se. In other words, the "metalloid elements" and the "metal elements" are each a group of elements that can become a cation when forming an inorganic compound with a halogen compound.

In the composition formula (1), M may include Y, and X may include Cl and Br.

The halide solid electrolyte may be, for example, Li₃(Ca,Y,Gd)X₆, Li₂MgX₄, Li₂FeX₄, Li(Al,Ga,In)X₄, Li₃(Al,Ga,In)X₆, or Lil. Here, the element X in the above solid electrolytes is at least one selected from the group consisting of F, Cl, Br, and I. In the present disclosure, when an element in a formula is expressed as, for example, "(AI,Ga,ln)", this expression indicates at least one element selected from the group of elements in parentheses. In other words, "(Al,Ga,In)" is synonymous with "at least one selected from the group consisting of Al, Ga, and In". The same applies to other elements.

Another example of the halide solid electrolyte is a compound represented by LiₐMe_{b}Y_{c}X₆, where a + mb + 3c = 6 and c > 0 are satisfied, Me is at least one selected from the group consisting of metalloid elements and metal elements other than Li or Y, and m is the valence of Me. The "metalloid elements" refer to B, Si, Ge, As, Sb, and Te. The "metal elements" refer to all the elements included in Groups 1 to 12 of the periodic table (except hydrogen) and all the elements included in Groups 13 to 16 of the periodic table (except B, Si, Ge, As, Sb, Te, C, N, P, O, S, and Se).

To enhance the ionic conductivity of the halide solid electrolyte material, Me may be at least one selected from the group consisting of Mg, Ca, Sr, Ba, Zn, Sc, Al, Ga, Bi, Zr, Hf, Ti, Sn, Ta, and Nb. The halide solid electrolyte may be Li₃YCl₆, Li₃YBr₆, or Li₃YBrₚCl₆₋ₚ, where p satisfies 0 < p < 6.

The sulfide solid electrolyte refers to a solid electrolyte including sulfur (S). The sulfide solid electrolyte, which includes sulfur, may further include a halogen element.

The sulfide solid electrolyte can be, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂.

The oxide solid electrolyte can be, for example: a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, and LiGeO₄ and element-substituted substances thereof; a garnet solid electrolyte typified by Li₇La₃Zr₂O₁₂ and element-substituted substances thereof; Li₃PO₄ and N-substituted substances thereof; or glass or glass ceramics based on a Li-B-O compound, such as LiBO₂ or Li₃BO₃, to which Li₂SO₄, Li₂CO₃, or the like is added.

The polymer solid electrolyte can be, for example, a compound of a polymer compound and a lithium salt. The polymer compound may have an ethylene oxide structure. The polymer compound having an ethylene oxide structure can include a lithium salt in a large amount. Accordingly, the ionic conductivity can be further enhanced. The lithium salt can be LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, or the like. One lithium salt selected from the lithium salts described as examples can be used alone. Alternatively, a mixture of two or more lithium salts selected from the lithium salts described as examples can be used.

The complex hydride solid electrolyte can be, for example, LiBH₄-LiI or LiBH₄-P₂S₅.

The electrolyte layer 102 may include a halide solid electrolyte. The halide solid electrolyte is free of sulfur.

The electrolyte layer 102 may include a sulfide solid electrolyte.

The electrolyte layer 102 may consist substantially of the halide solid electrolyte. The phrase "consist substantially of" as used herein is intended to allow for impurities contained in a content of less than 0.1%. The electrolyte layer 102 may consist of the halide solid electrolyte.

With the above configuration, it is possible to enhance the ionic conductivity of the electrolyte layer 102, thereby reducing a decrease in the energy density of the battery.

The electrolyte layer 102 may further include a binder. The binder may be the same material as any of the materials usable for the active material layer 104.

The electrolyte layer 102 may have a thickness of 1 µm or more and 500 µm or less. In the case where the electrolyte layer 102 has a thickness of 1 µm or more, the first electrode 101 and the second electrode 103 are less prone to be short-circuited. In the case where the electrolyte layer 102 has a thickness of 500 µm or less, the battery can operate at a high output.

The solid electrolyte may have any shape. In the case where the solid electrolyte is a powdery material, its shape may be, for example, an acicular, spherical, or ellipsoidal shape. The solid electrolyte may be, for example, particulate.

For example, in the case where the solid electrolyte is particulate (e.g., spherical), the solid electrolyte may have a median diameter of 100 µm or less, and may have a median diameter of 10 µm or less.

In the present disclosure, the "median diameter" means the particle diameter at a cumulative volume equal to 50% in the volumetric particle size distribution. The volumetric particle size distribution is measured with, for example, a laser diffractometer or an image analyzer.

The solid electrolyte that may be included in the electrolyte layer 102 can be manufactured by the following method.

Raw material powders are prepared so as to obtain a target composition. Examples of the raw material powders include an oxide, a hydroxide, a halide, and an acid halide.

In an example where the target composition is Li₃YBr₄Cl₂, LiBr, YCl₃, and YBr₃ are mixed in an approximate molar ratio of 3:0.66:0.33. The raw material powders may be mixed in a molar ratio that has been adjusted in advance so as to cancel out a composition change that can occur in the synthesis process.

The raw material powders are reacted with each other mechanochemically (i.e., by mechanochemical milling) in a mixer such as a planetary ball mill to obtain a reactant. The reactant may be fired in a vacuum or in an inert atmosphere. Alternatively, the mixture of the raw material powders may be fired in a vacuum or in an inert atmosphere to obtain a reactant. The firing is performed, for example, desirably at 100°C or higher and 300°C or lower for 1 hour or longer. To suppress a composition change during the firing, the raw material powders are fired desirably in a hermetically sealed container such as a quartz tube.

Through these steps, the solid electrolyte for use as the electrolyte layer 102 is obtained.

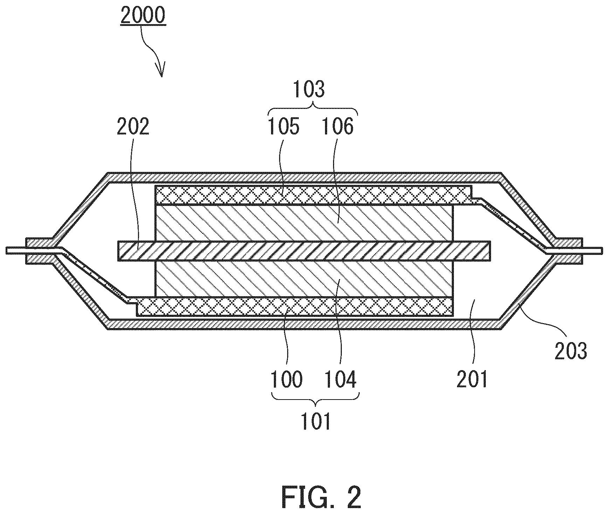

FIG. 2 is a cross-sectional view schematically showing a modification of the battery according to the embodiment of the present disclosure. In the case where the electrolyte material for the electrolyte layer 102 is an electrolyte solution, that is, in the case where the electrolyte layer includes an electrolyte solution, the battery according to the embodiment of the present disclosure may be, for example, a battery 2000 configured as shown in FIG. 2. In FIG. 2, the members having the same functions as those of the members shown in FIG. 1 are denoted by the same reference numerals. The battery 2000 includes the first electrode 101, the second electrode 103, an electrolyte solution 201, a separator 202, and an exterior 203. The separator 202 is disposed between the first electrode 101 and the second electrode 103. The first electrode 101 and the second electrode 103 face each other with the separator 202 interposed therebetween. The first electrode 101, the second electrode 103, the separator 202, and the electrolyte solution 201 are housed in the exterior 203. The electrolyte solution 201 is, for example, an electrolyte solution with which the first electrode 101, the second electrode 103, and the separator 202 are impregnated. Thus, in the battery 2000 having a configuration in which an electrolyte solution is used as the electrolyte, the electrolyte solution 201 with which the separator 202 is impregnated is positioned between the first electrode 101 and the second electrode 103. In other words, the electrolyte solution 201 with which the separator 202 is impregnated as described above serves as the electrolyte layer. The electrolyte solution 201 may fill the inner space of the exterior 203.

The electrolyte solution 201 includes, for example, a nonaqueous solvent and a lithium salt.

Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, butylene carbonate, and vinylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used. The electrolyte solution may include vinylene carbonate as the solvent.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used.

The separator 202 has lithium-ion conductivity. The material for the separator 202 may be any material through which lithium ions are allowed to pass. The material for the separator 202 can be at least one selected from the group consisting of a solid electrolyte, a gel electrolyte, an ion exchange resin membrane, such as a lithium cation exchange resin membrane, a semipermeable membrane, and a porous membrane. In the case where the separator 202 is made of any of the above materials, the safety of the battery 2000 can be sufficiently achieved. Examples of the solid electrolyte include a sulfide solid electrolyte, such as Li₂S-P₂S₅, and an oxide solid electrolyte, such as Li₇La₃Zr₂O₁₂ (LLZ). Examples of the gel electrolyte include a gel electrolyte including a fluororesin, such as PVdF. Examples of the ion exchange resin membrane include a cation exchange membrane and an anion exchange membrane. Examples of the porous membrane include a porous membrane made of polyolefin resin and a porous membrane made of glass paper obtained by weaving glass fibers into a nonwoven fabric.

The exterior 203 is made of a material obtained by, for example, laminating a metal foil, such as an aluminum foil, with a resin film, such as a polyethylene terephthalate (PET) film. The exterior 203 may be a resin or metal container.

The electrolyte material for use as the electrolyte layer is not limited to the above solid electrolyte or electrolyte solution, and may be a gel electrolyte or an ionic liquid.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻ and C(SO₂CF₃)₃⁻.

The ionic liquid may include a lithium salt.

### [Second electrode]

The second electrode 103 serves as the positive electrode. The second electrode 103 includes a material capable of occluding and releasing metal ions such as lithium ions. The material is, for example, a positive electrode active material.

The second electrode 103 may include the current collector 105 and the active material layer 106. The active material layer 106 includes a positive electrode active material. The active material layer 106 is disposed, for example, between the current collector 105 and the electrolyte layer 102.

The active material layer 106 may be disposed on the surface of the current collector 105 so as to be in direct contact with the current collector 105.

The positive electrode active material can be, for example, a lithium-containing transition metal oxide, a transition metal fluoride, a polyanion material, a fluorinated polyanion material, a transition metal sulfide, a transition metal oxysulfide, or a transition metal oxynitride. Examples of the lithium-containing transition metal oxide include LiNi_{1-x-y}CoₓAl_{y}O₂ ((x + y) < 1), LiNi_{1-x-y}CoₓMn_{y}O₂ ((x + y) < 1), and LiCoO₂. In particular, in the case where the lithium-containing transition metal oxide is used as the positive electrode active material, it is possible to reduce the electrode manufacturing cost and enhance the battery average discharge voltage. The positive electrode active material may include, for example, Li(Ni,Co,Mn)O₂.

Examples of the material for the current collector 105 include a metal material. Examples of the metal material include copper, stainless steel, iron, and aluminum.

The second electrode 103 may include a solid electrolyte. The solid electrolyte may be any of the solid electrolytes described as examples of the material for the electrolyte layer 102.

The positive electrode active material may have a median diameter of 0.1 µm or more and 100 µm or less. In the case where the positive electrode active material has a median diameter of 0.1 µm or more, the positive electrode active material and the solid electrolyte can form a favorable dispersion state. This enhances the charge and discharge characteristics of the battery. In the case where the positive electrode active material has a median diameter of 100 µm or less, lithium diffuses at an enhanced rate. This enables the battery to operate at a high output.

The positive electrode active material may have a larger median diameter than the solid electrolyte has. In this case, the positive electrode active material and the solid electrolyte can form a favorable dispersion state.

From the viewpoint of the energy density and output of the battery, in the second electrode 103, the ratio of the volume of the positive electrode active material to the sum of the volume of the positive electrode active material and the volume of the solid electrolyte may be 0.30 or more and 0.95 or less.

To prevent the solid electrolyte from reacting with the positive electrode active material, a coating layer may be formed on the surface of the positive electrode active material. In this case, an increase in the reaction overvoltage of the battery can be suppressed. Examples of the coating material included in the coating layer include a sulfide solid electrolyte, an oxide solid electrolyte, and a halide solid electrolyte.

The second electrode 103 may have a thickness of 10 µm or more and 500 µm or less. In the case where the second electrode 103 has a thickness of 10 µm or more, the battery can achieve a sufficient energy density. In the case where the second electrode 103 has a thickness of 500 µm or less, the battery can operate at a high output.

The second electrode 103 may include a conductive material for the purpose of enhancing the electronic conductivity.

The second electrode 103 may include a binder.

The conductive material and the binder each may be the same material as any of the materials usable for the active material layer 104.

The second electrode 103 may include a nonaqueous electrolyte solution, a gel electrolyte, or an ionic liquid for the purpose of facilitating the transfer of lithium ions and enhancing the output characteristics of the battery.

The above description has been provided on the configuration example in which the first electrode 101 is the negative electrode and the second electrode 103 is the positive electrode. Alternatively, a configuration may be employed in which the first electrode 101 is the positive electrode and the second electrode 103 is the negative electrode.

In the case where the first electrode 101 is the positive electrode and the second electrode 103 is the negative electrode, the active material layer 104 is the positive electrode active material layer. In other words, Bi included in the active material layer 104 serves as the positive electrode active material. In this case, the second electrode 103, which is the negative electrode, is made of, for example, lithium metal.

The battery 1000, which includes the first electrode 101, the electrolyte layer 102, and the second electrode 103 as the basic constituent elements, is enclosed in a hermetically sealed container so as to prevent incorporation of, for example, the air and moisture. Examples of the shape of the battery 1000 include a coin type, a cylindrical type, a prismatic type, a sheet type, a button type, a flat type, and a stacked type.

### Examples

The present disclosure will be described in detail below with reference to examples and reference examples. The following examples are illustrative only, and the present disclosure is not limited to the following examples.

### (Example 1)

### <Production of first electrode>

A pretreatment was performed in which a copper foil (10 cm × 10 cm, thickness: 10 µm) was preliminarily degreased with an organic solvent, and then degreased by being immersed in an acidic solvent with its one side masked. Thus, the surface of the copper foil was activated. Electroplating of the copper foil with bismuth was performed as follows: the copper foil serving as the plating substrate was immersed in a bismuth plating bath, an electrical circuit was configured with an external power supply so that the copper foil would serve as the anode, and the current and potential were adjusted.

Thus, the bismuth ions in the bismuth plating bath became reduced on the copper foil and thus a Bi plating film was formed. Next, the bismuth-electroplated copper foil was immersed in a manganese plating bath, an electrical circuit was configured with an external power supply so that the bismuth-electroplated copper foil would serve as the anode, and the current and potential were adjusted. Thus, the manganese ions in the manganese plating bath became reduced on the bismuth plating and thus a Mn plating film was formed.

The bismuth plating bath used was an organic sulfonic acid bath. The bismuth plating bath was prepared by adding bismuth methanesulfonate as the soluble bismuth salt to a 1.0 mol/L aqueous solution of methanesulfonic acid up to a Bi³⁺ ion concentration of 0.18 mol/L.

The manganese plating bath selected was a sulfate bath. The manganese plating bath was prepared by adding manganese sulfate as the soluble manganese salt to a 1.0 mol/L aqueous solution of ammonium sulfate up to a Mn²⁺ ion concentration of 0.92 mol/L.

The copper foil activated was connected to a power supply for current application and then immersed in the bismuth plating bath. Subsequently, the unmasked surface of the copper foil was electroplated with bismuth at a controlled current density of 2 A/dm² up to a thickness of approximately 3 µm. Thus, a Bi plating film was prepared.

Next, in the same manner as in the electroplating with bismuth, the copper foil with the Bi plating film formed thereon was connected to a power supply for current application and then immersed in the manganese plating bath. Subsequently, the unmasked surface of the copper foil was electroplated with manganese at a controlled current density of 2 A/dm² up to a thickness of approximately 1 µm. Thus, a Mn plating film was prepared.

Furthermore, in the step of immersing the copper foil in the plating bath, the copper foil was masked, except for the plating target surface.

Following the electroplating, the copper foil was taken out from the plating bath, and the mask was removed. The copper foil was then cleaned with pure water and dried. Subsequently, in an electric furnace set to an argon atmosphere, the copper foil and the plating layer (i.e., Bi plating film and Mn plating film) formed on the copper foil were heat-treated at 200C° for 100 hours.

The plating layer after the heat treatment corresponds to the active material layer of the first electrode. The plating layer after the heat treatment, that is, the active material layer was subjected to structural analysis by surface X-ray diffractometry. The X-ray diffractometry was performed on the surface of the active material layer, that is, the thickness direction of the active material layer, by a θ-2θ method using Cu-Kα radiation having wavelengths of 1.5405 Å and 1.5444 Å as X-rays with an X-ray diffractometer (MiniFlex manufactured by Rigaku Corporation). FIG. 3 is a graph showing, for the first electrode of a battery according to Example 1, the X-ray diffraction patterns of the active material layer in the initial state, after charge, and after charge and discharge. The X-ray diffraction pattern of the active material layer in the initial state is the X-ray diffraction pattern represented by "Initial" in FIG. 3. This X-ray diffraction pattern demonstrates that, in the active material layer, BiMn having a hexagonal crystal structure of space group P63/mmc was generated. The X-ray diffraction pattern also identifies the phases of Cu included in the Cu foil serving as the current collector and in the active material layer.

Subsequently, by punching out to a size of 2 cm × 2 cm, the first electrode was obtained. In other words, the first electrode of Example 1 had a configuration in which, on a current collector constituted of a copper foil, an active material layer consisting of BiMn is provided.

### <Production of battery>

The working electrode used was the first electrode. The counter electrode used was Li metal having a thickness of 0.34 µm. The Li metal was double-coated with a microporous separator Celgard 3401 manufactured by Celgard, LLC. The electrolyte solution prepared was a solution obtained by dissolving LiPF₆ in vinylene carbonate (VC) at a concentration of 1.0 mol/L. The working electrode, the counter electrode, and the electrolyte solution as prepared above were used to assemble a battery serving as the test cell of Example 1. The test cell prepared here is a test cell for single-electrode evaluation using a working electrode and a counter electrode, and is used to test the performance of one of the electrodes of a battery. In detail, an electrode under test is used as the working electrode, and a suitable active material in a sufficient amount to cover the reaction of the working electrode is used for the counter electrode. This test cell was used to test the performance of the first electrode as the negative electrode. Accordingly, a large excess of Li metal was used as the counter electrode as with the usual practice. The first electrode, tested for the performance by using such a test cell, can be used as the negative electrode by, for example, being combined with a positive electrode including a positive electrode active material as described in the embodiment above, for example, a Li-containing transition metal oxide.

### <Charge and discharge test>

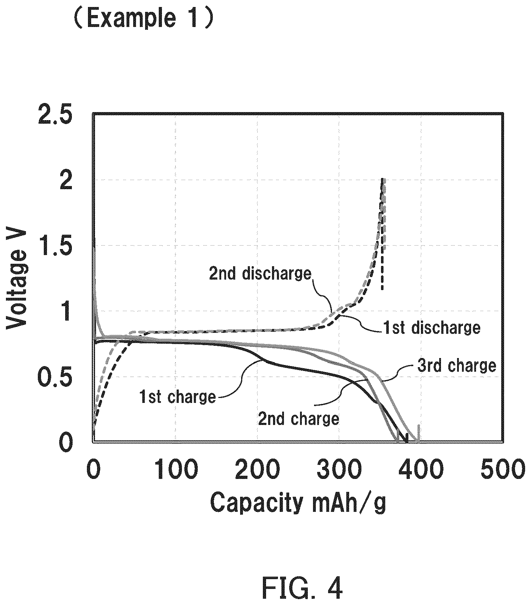

The battery produced as the test cell was subjected to a charge and discharge test. In the charge and discharge test, at a constant current value of 0.06 mA (equivalent to a rate of 0.05 IT, where the theoretical capacity of Bi is 384 mAh/g), the battery was charged to 0 V (vs. Li) and discharged to 2.0 V (vs. Li), and the charge and discharge were repeated. The battery was tested in a thermostatic chamber set to 25°C. FIG. 4 is a graph showing the results of the charge and discharge test on the battery according to Example 1. As shown in FIG. 4, Example 1 exhibited a charge reaction potential ranging from 0.5 V to 0.8 V (vs. Li) and a discharge reaction potential close to 0.85 V (vs. Li).

### <Structural change of active material determined from X-ray diffraction>

Under the same conditions as the conditions for charge and discharge test described in <Charge and discharge test> above, the first electrode was subjected to charge and to charge and discharge. X-ray diffractometry was performed on the first electrode after the charge and after the charge and discharge for the surface where the active material layer is formed. The X-ray diffractometry on the active material layer after the charge and after the charge and discharge was performed in the same manner as in the X-ray diffractometry performed on the active material layer in the initial state described above. The X-ray diffraction pattern of the active material layer after the charge is the X-ray diffraction pattern represented by "charge" in FIG. 3, and the X-ray diffraction pattern of the active material layer after the charge and discharge is the X-ray diffraction pattern represented by "charge-discharge" in the figure. The X-ray diffraction patterns shown in FIG. 3 demonstrate that BiMn forms LisBi by charge and forms BiMn again by discharge.

### (Example 2)

### <Production of first electrode>

A first electrode was produced in the same manner as in Example 1 except for the difference in final size of the first electrode. In Example 2, the first electrode obtained was a ϕ0.92-cm punched out piece.

### <Solid electrolyte>

The solid electrolyte used for the electrolyte layer was a sulfide solid electrolyte Li₆PS₅Cl (manufactured by Ampcera Inc., 80 mg).

### <Production of battery>

The first electrode obtained was disposed in an insulating outer cylinder having an inner diameter of 9.4 mm. On the active material layer of the first electrode, the solid electrolyte Li₆PS₅Cl (80 mg) was stacked and then an indium-lithium alloy (molar ratio of In:Li = 1:1) (200 mg) was stacked as the second electrode to obtain a stack. The indium-lithium alloy was prepared by pressure-welding a small piece of a lithium foil onto an indium foil to diffuse lithium into indium. To the above stack, a pressure of 360 MPa was applied in the stacking direction. Thus, a battery serving as the test cell including a first electrode, a solid electrolyte layer, and a second electrode was produced. In the battery serving as the test cell, the first electrode had a thickness of 1.5 µm, the solid electrolyte layer had a thickness of 500 µm, and the second electrode had a thickness of 15 µm.

Subsequently, current collectors made of stainless steel were attached to the first electrode and the second electrode, and current collector leads were attached to the current collectors.

Lastly, an insulating ferrule was used to block the inside of the insulating outer cylinder from the outside air atmosphere to hermetically seal the cylinder.

Thus, a battery serving as the test cell of Example 2 was obtained in which the first electrode including the active material layer consisting of BiMn serves as the working electrode and the lithium-indium alloy serves as the counter electrode.

### <Charge and discharge test>

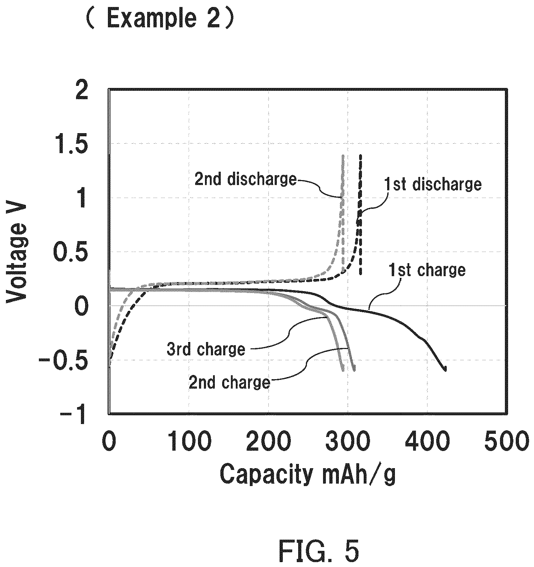

The battery produced was subjected to a charge and discharge test under the following conditions. The theoretical capacity of Bi was assumed to be 384 mAh/g. At a constant current value equivalent to a rate of 0.05 IT on a Bi basis determined from the weight of Bi with which electroplating was performed, the battery was charged to -0.62 V (i.e., 0 V (vs. Li⁺/Li)), discharged to 1.38 V (i.e., 2.0 V (vs. Li⁺/Li)), and then charged to -0.62 V (i.e., 0 V (vs. Li/Li)). The battery was tested in a thermostatic chamber set to 25°C. FIG. 5 is a graph showing the results of the charge and discharge test on the battery according to Example 2. In terms of Li reference potentials converted from the InLi reference potentials shown in FIG. 5, Example 2 exhibited a charge reaction potential ranging from 0.5 V to 0.77 V (vs. Li) and a discharge reaction potential close to 0.83 V (vs. Li). The potentials shown in the graph in FIG. 5 are InLi reference potentials based on InLi as the counter electrode. The above conversion from the InLi reference potentials into the Li reference potentials is conversion in terms of Li reference from the InLi potential +0.62 V. In subsequent examples where InLi was used as the counter electrode, the conversion into Li reference potentials can be performed in the same manner.

### (Example 3)

### <Production of first electrode>

A first electrode was produced in the same manner as in Example 1 except for the difference in final size of the first electrode. In Example 3, the first electrode obtained was a ϕ0.92-cm punched out piece.

### <Preparation of solid electrolyte>

In an argon atmosphere with a dew point of -60°C or lower (hereinafter referred to as a "dry argon atmosphere"), raw material powders LiBr, YCl₃, and YBr₃ were prepared in a molar ratio of LiBr:YCl₃:YBr₃ = 3:2/3:1/3. These raw material powders were pulverized and mixed in a mortar to obtain a mixture of the raw material powders. Subsequently, in a dry argon atmosphere, the mixture of the raw material powders obtained was fired in an electric furnace at 500°C for 3 hours. The fired product thus obtained was pulverized in a mortar with a pestle. Thus, a solid electrolyte having composition represented by Li₃YBr₄Cl₂ was prepared.

### <Production of battery>

A battery serving as the test cell of Example 3 was produced in the same manner as in Example 2, except that the solid electrolyte layer was prepared by using the solid electrolyte Li₃YBr₄Cl₂ (80 mg) instead of Li₆PS₅Cl (80 mg).

### <Charge and discharge test>

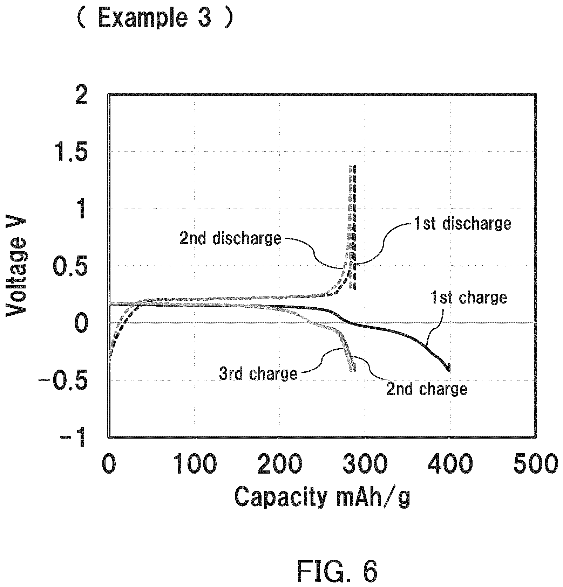

The battery produced was subjected to a charge and discharge test under the following conditions. The theoretical capacity of Bi was assumed to be 384 mAh/g. At a constant current value equivalent to a rate of 0.05 IT on a Bi basis determined from the weight of Bi with which electroplating was performed, the battery was charged to -0.42 V (i.e., 0.2 V (vs. Li⁺/Li)), discharged to 1.38 V (i.e., 2.0 V (vs. Li⁺/Li)), and then charged to -0.42 V (i.e., 0.2 V (vs. Li/Li)). The battery was tested in a thermostatic chamber set to 25°C. FIG. 6 is a graph showing the results of the charge and discharge test on the battery according to Example 3. In terms of Li reference potentials converted from the InLi reference potentials shown in FIG. 6, Example 3 exhibited a charge reaction potential ranging from 0.5 V to 0.79 V (vs. Li) in the 2nd and subsequent cycles and a discharge reaction potential close to 0.85 V (vs. Li).

### (Example 4)

### <Production of first electrode>

A pretreatment was performed in which a copper foil (10 cm × 10 cm, thickness: 10 µm) was preliminarily degreased with an organic solvent, and then degreased by being immersed in an acidic solvent with its one side masked. Thus, the surface of the copper foil was activated. Electroplating of the copper foil with bismuth was performed as follows: the copper foil serving as the plating substrate was immersed in a bismuth plating bath, an electrical circuit was configured with an external power supply so that the copper foil would serve as the anode, and the current and potential were adjusted.
Thus, the bismuth ions in the bismuth plating bath became reduced on the copper foil and thus a Bi plating film was formed. Next, the bismuth-electroplated copper foil was immersed in a manganese plating bath, an electrical circuit was configured with an external power supply so that the bismuth-electroplated copper foil would serve as the anode, and the current and potential were adjusted. Thus, the manganese ions in the manganese plating bath became reduced on the bismuth plating and thus a Mn plating film was formed.

The bismuth plating bath used was an organic sulfonic acid bath. The bismuth plating bath was prepared by adding bismuth methanesulfonate as the soluble bismuth salt to a 1.0 mol/L aqueous solution of methanesulfonic acid up to a Bi³⁺ ion concentration of 0.18 mol/L.

The manganese plating bath selected was a sulfate bath. The manganese plating bath was prepared by adding manganese sulfate as the soluble manganese salt to a 1.0 mol/L aqueous solution of ammonium sulfate up to a Mn²⁺ ion concentration of 0.92 mol/L.

The copper foil activated was connected to a power supply for current application and then immersed in the bismuth plating bath. Subsequently, the unmasked surface of the copper foil was electroplated with bismuth at a controlled current density of 2 A/dm² up to a thickness of approximately 4 µm. Thus, a Bi plating film was prepared.

Next, in the same manner as in the electroplating with bismuth, the copper foil with the Bi plating film formed thereon was connected to a power supply for current application and then immersed in the manganese plating bath. Subsequently, the unmasked surface of the copper foil was electroplated with manganese at a controlled current density of 2 A/dm² up to a thickness of approximately 1 µm. Thus, a Mn plating film was prepared.

Furthermore, in the step of immersing the copper foil in the plating bath, the copper foil was masked, except for the plating target surface.

Following the electroplating, the copper foil was taken out from the plating bath, and the mask was removed. The copper foil was then cleaned with pure water and dried. Subsequently, in an electric furnace set to an argon atmosphere, the copper foil and the plating layer (i.e., Bi plating film and Mn plating film) formed on the copper foil were heat-treated at 200C° for 100 hours.

The plating layer after the heat treatment corresponds to the active material layer of the first electrode. The plating layer after the heat treatment, that is, the active material layer was subjected to structural analysis by surface X-ray diffractometry. The X-ray diffractometry was performed in the same manner as in Example 1. FIG. 7 is a graph showing, for the first electrode of the battery according to Example 4, the X-ray diffraction patterns of the active material layer in the initial state, after charge, and after charge and discharge. The X-ray diffraction pattern of the active material layer in the initial state is the X-ray diffraction pattern represented by "Initial" in FIG. 7. This X-ray diffraction pattern demonstrates that, in the active material layer, Bi₄Cu₄Mn₃ having a cubic crystal structure of space group Fm-3m was generated. The X-ray diffraction pattern also identifies the phase of the Cu foil serving as the current collector.

Subsequently, by punching out to a size of 2 cm × 2 cm, the first electrode was obtained. In other words, the first electrode of Example 1 had a configuration in which, on a current collector constituted of a copper foil, an active material layer consisting of Bi₄Cu₄Mn₃ is provided.

### <Production of battery>

A battery serving as the test cell of Example 4 was produced in the same manner as in Example 1, except that the first electrode of Example 4 was used as the working electrode.

### <Charge and discharge test>

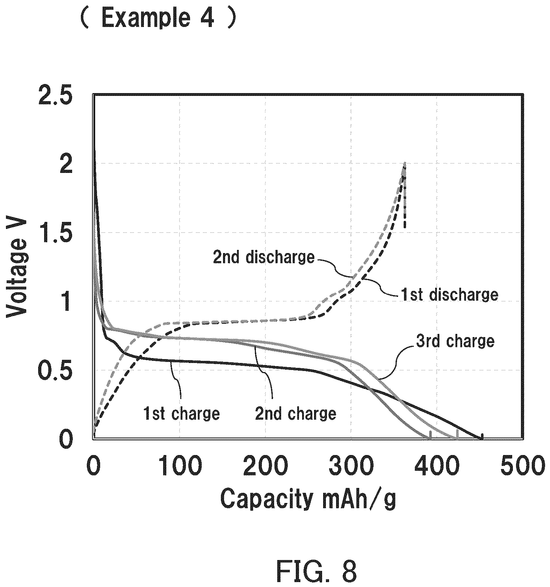

The battery produced as the test cell was subjected to a charge and discharge test. The charge and discharge test was performed in the same manner as in the charge and discharge test in Example 1. FIG. 8 is a graph showing the results of the charge and discharge test on the battery according to Example 4. As shown in FIG. 8, Example 4 exhibited a charge reaction potential ranging from 0.2 V to 0.6 V (vs. Li) and a discharge reaction potential close to 0.85 V (vs. Li).

### <Structural change of active material determined from X-ray diffraction>

Under the same conditions as the conditions for charge and discharge test described in <Charge and discharge test> above, the first electrode was subjected to charge and to charge and discharge. X-ray diffractometry was performed on the first electrode after the charge and after the charge and discharge for the surface where the active material layer is formed. The X-ray diffractometry on the active material layer after the charge and after the charge and discharge was performed in the same manner as in the X-ray diffractometry performed on the active material layer in the initial state described above. The X-ray diffraction pattern of the active material layer after the charge is the X-ray diffraction pattern represented by "charge" in FIG. 7, and the X-ray diffraction pattern of the active material layer after the charge and discharge is the X-ray diffraction pattern represented by "charge-discharge" in the figure. The X-ray diffraction patterns shown in FIG. 7 demonstrate that Bi₄Cu₄Mn₃ forms LisBi by charge and forms Bi₄Cu₄Mn₃ again by discharge.

### (Example 5)

### <Production of first electrode>

A first electrode was produced in the same manner as in Example 4 except for the difference in final size of the first electrode. In Example 5, the first electrode obtained was a ϕ0.92-cm punched out piece.

### <Solid electrolyte>

The solid electrolyte used for the electrolyte layer was the sulfide solid electrolyte Li₆PS₅Cl (manufactured by Ampcera Inc., 80 mg).

### <Production of battery>

The first electrode obtained was disposed in an insulating outer cylinder having an inner diameter of 9.4 mm. On the active material layer of the first electrode, the solid electrolyte Li₆PS₅Cl (80 mg) was stacked and then an indium-lithium alloy (molar ratio of In:Li = 1:1) (200 mg) was stacked as the second electrode to obtain a stack. The indium-lithium alloy was prepared by pressure-welding a small piece of a lithium foil onto an indium foil to diffuse lithium into indium. To the above stack, a pressure of 360 MPa was applied in the stacking direction. Thus, a battery serving as the test cell including a first electrode, a solid electrolyte layer, and a second electrode was produced. In the battery serving as the test cell, the first electrode had a thickness of 1.5 µm, the solid electrolyte layer had a thickness of 500 µm, and the second electrode had a thickness of 15 µm.

Subsequently, current collectors made of stainless steel were attached to the first electrode and the second electrode, and current collector leads were attached to the current collectors.

Lastly, an insulating ferrule was used to block the inside of the insulating outer cylinder from the outside air atmosphere to hermetically seal the cylinder.

Thus, a battery serving as the test cell of Example 5 was obtained in which the first electrode including the active material layer consisting of Bi₄Cu₄Mn₃ serves as the working electrode and the lithium-indium alloy serves as the counter electrode.

### <Charge and discharge test>

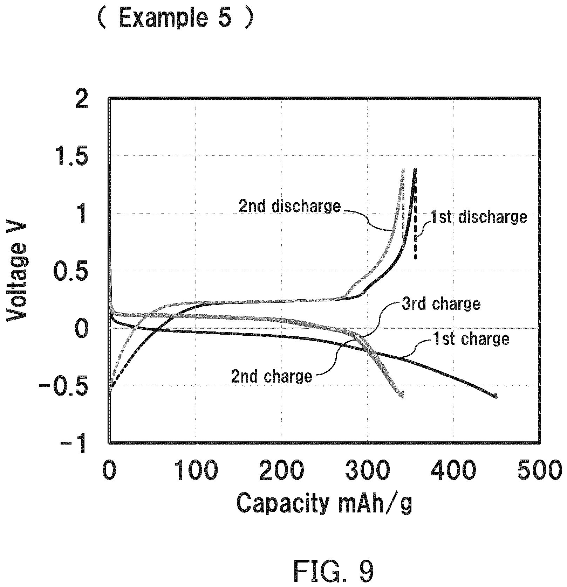

The battery produced was subjected to a charge and discharge test in the same manner as in Example 2. FIG. 9 is a graph showing the results of the charge and discharge test on the battery according to Example 5. In terms of Li reference potentials converted from the InLi reference potentials shown in FIG. 9, Example 5 exhibited a charge reaction potential ranging from 0.32 V to 0.6 V (vs. Li), which was a large slope, in the 1st cycle. However, the charge reaction potential ranged from 0.5 V to 0.7 V (vs. Li) in the 2nd and subsequent cycles, and the discharge reaction potential was close to 0.85 V (vs. Li).

### (Example 6)

### <Production of first electrode>

A first electrode was produced in the same manner as in Example 4 except for the difference in final size of the first electrode. In Example 6, the first electrode obtained was a ϕ0.92-cm punched out piece.

### <Preparation of solid electrolyte>

The solid electrolyte having the composition represented by Li₃YBr₄Cl₂ was prepared in the same way as in Example 3.

### <Produced of battery>

A battery serving as the test cell of Example 6 was produced in the same manner as in Example 5, except that the solid electrolyte layer was prepared by using the solid electrolyte Li₃YBr₄Cl₂ (80 mg) instead of Li₆PS₅Cl (80 mg).

### <Charge and discharge test>

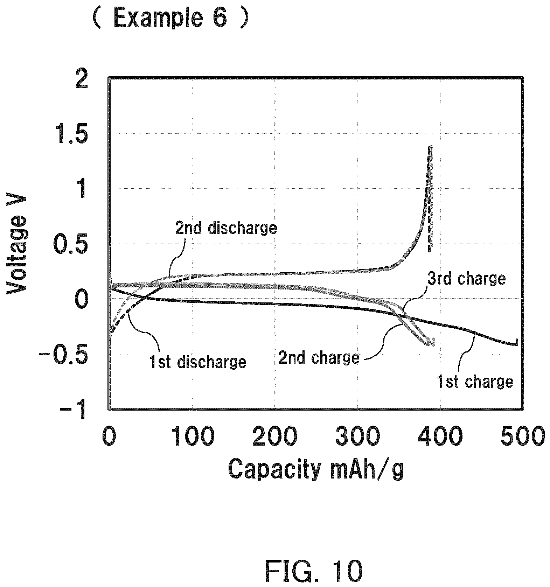

The battery produced was subjected to a charge and discharge test in the same manner as in Example 3. FIG. 10 is a graph showing the results of the charge and discharge test on the battery according to Example 6. In terms of Li reference potentials converted from the InLi reference potentials shown in FIG. 10, Example 6 exhibited a charge reaction potential ranging from 0.37 V to 0.75 V (vs. Li), which was a large slope, in the 1st cycle. However, the charge reaction potential ranged from 0.52 V to 0.75 V (vs. Li) in the 2nd and subsequent cycles, and the discharge reaction potential was close to 0.85 V (vs. Li).

### (Reference Example 1)

### <Production of first electrode>

A pretreatment was performed in which a nickel foil (10 cm × 10 cm, thickness: 12 µm) was preliminarily degreased with an organic solvent, and then degreased by being immersed in an acidic solvent with its one side masked. Thus, the surface of the copper foil was activated. To 1.0 mol/L of methanesulfonic acid, methanesulfonic acid bismuth was added as the soluble bismuth salt up to a Bi³⁺ ion concentration of 0.18 mol/L. Thus, a plating bath was prepared. The nickel foil activated was connected to a power supply for current application and then immersed in the plating bath. Subsequently, the unmasked surface of the nickel foil was electroplated with bismuth at a controlled current density of 2 A/dm² up to a thickness of approximately 5 µm. Following the electroplating, the nickel foil was taken out from the acidic bath, and the mask was removed. The nickel foil was then cleaned with pure water and dried. Subsequently, in an electric furnace set to an argon atmosphere, the bismuth-electroplated nickel foil was heat-treated at 400C° for 60 hours. Following the heat treatment, the Bi plating layer formed on the nickel foil was subjected to surface X-ray diffractometry in the same manner as in Example 1. The X-ray diffraction pattern obtained by the diffractometry demonstrates that BiNi having a monoclinic crystal structure of C2/m space group was generated. Subsequently, the stack composed of the nickel foil and the layer consisting of BiNi formed thereon was punched out to a size of 2 cm × 2 cm. Thus, the first electrode was obtained. In other words, the first electrode of Reference Example 1 had a configuration in which, on a current collector constituted of a nickel foil, an active material layer consisting of BiNi is provided.

### <Production of battery>

A battery serving as the test cell of Reference Example 1 was produced in the same manner as in Example 1, except that the first electrode of Reference Example 1 was used as the working electrode.

### <Charge and discharge test>

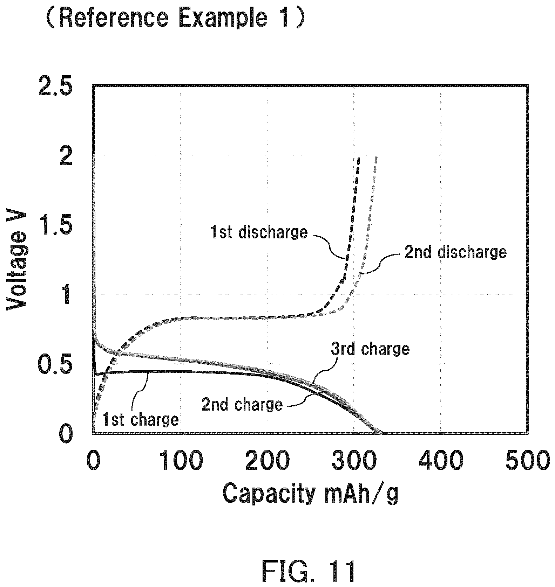

A charge and discharge test was performed in the same manner as in Example 1, except that the test cell of Reference Example 1 was used. FIG. 11 is a graph showing the results of the charge and discharge test on the battery according to Reference Example 1. As shown in FIG. 11, the battery of Reference Example 1 exhibited a charge reaction potential ranging from 0.44 V to 0.5 V (vs. Li), which is low, and a discharge reaction potential close to 0.8 V (vs. Li).

### (Reference Example 2)

### <Production of first electrode>

A first electrode was produced in the same manner as in Reference Example 1 except for the difference in final size of the first electrode. In Reference Example 2, the first electrode obtained was a ϕ0.92-cm punched out piece.

### <Solid electrolyte>

The solid electrolyte used for the electrolyte layer was the sulfide solid electrolyte Li₆PS₅Cl (manufactured by Ampcera Inc., 80 mg).

### <Production of battery>

The first electrode obtained was disposed in an insulating outer cylinder having an inner diameter of 9.4 mm. On the active material layer of the first electrode, the solid electrolyte Li₆PS₅Cl (80 mg) was stacked and then an indium-lithium alloy (molar ratio of In:Li = 1:1) (200 mg) was stacked as the second electrode to obtain a stack. The indium-lithium alloy was prepared by pressure-welding a small piece of a lithium foil onto an indium foil to diffuse lithium into indium. To the above stack, a pressure of 360 MPa was applied in the stacking direction. Thus, a battery serving as the test cell including a first electrode, a solid electrolyte layer, and a second electrode was produced. In the battery serving as the test cell, the first electrode had a thickness of 1.5 µm, the solid electrolyte layer had a thickness of 500 µm, and the second electrode had a thickness of 15 µm.

Subsequently, current collectors made of stainless steel were attached to the first electrode and the second electrode, and current collector leads were attached to the current collectors.

Lastly, an insulating ferrule was used to block the inside of the insulating outer cylinder from the outside air atmosphere to hermetically seal the cylinder.

Thus, a battery serving as the test cell of Reference Example 2 was obtained in which the first electrode including the active material layer consisting of BiNi serves as the working electrode and the lithium-indium alloy serves as the counter electrode.

### <Charge and discharge test>

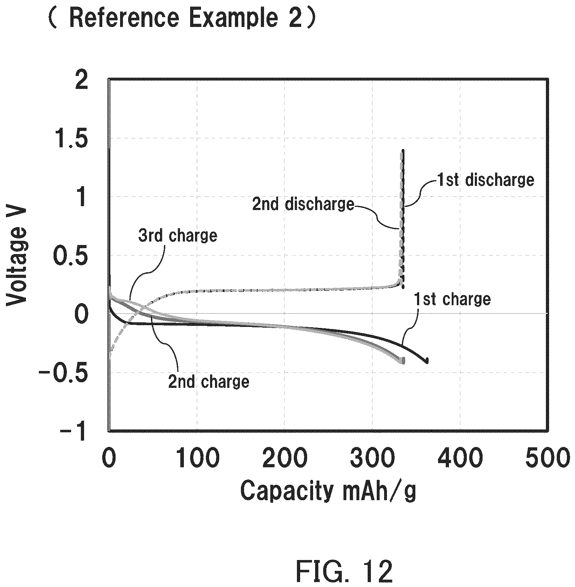

The battery produced was subjected to a charge and discharge test under the following conditions. The theoretical capacity of Bi was assumed to be 384 mAh/g. At a constant current value equivalent to a rate of 0.05 IT on a Bi basis determined from the weight of Bi with which electroplating was performed, the battery was charged to -0.42 V (i.e., 0.2 V (vs. Li⁺/Li)), discharged to 1.38 V (i.e., 2.0 V (vs. Li⁺/Li)), and then charged to -0.42 V (i.e., 0.2 V (vs. Li/Li)). The battery was tested in a thermostatic chamber set to 25°C. FIG. 12 is a graph showing the results of the charge and discharge test on the battery according to Reference Example 2. In terms of Li reference potentials converted from the InLi reference potentials shown in FIG. 12, Reference Example 2 exhibited a charge reaction potential ranging from 0.48 V to 0.53 V (vs. Li) and a discharge reaction potential close to 0.8 V (vs. Li).

### (Reference Example 3)

### <Production of first electrode>

A first electrode was produced in the same manner as in Reference Example 1 except for the difference in final size of the first electrode. In Reference Example 3, the first electrode obtained was a ϕ0.92-cm punched out piece.

### <Preparation of solid electrolyte>

The solid electrolyte having the composition represented by Li₃YBr₄Cl₂ was prepared in the same way as in Example 3.

### <Production of battery>

A battery serving as the test cell of Reference Example 3 was produced in the same manner as in Reference Example 2, except that the solid electrolyte layer was prepared by using the solid electrolyte Li₃YBr₄Cl₂ (80 mg) instead of Li₆PS₅Cl (80 mg).

### <Charge and discharge test>

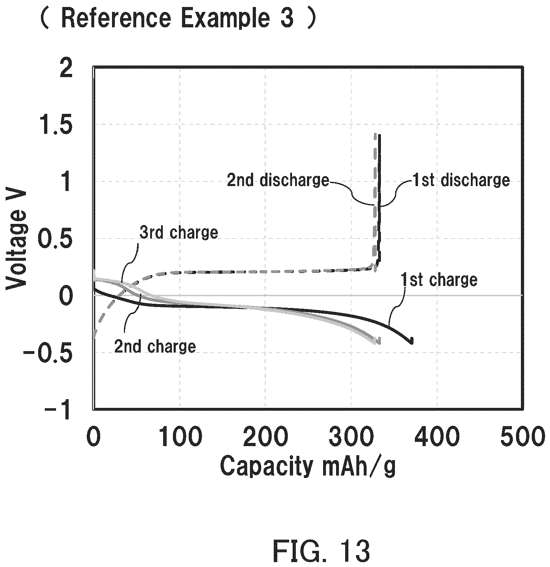

The battery produced was subjected to a charge and discharge test in the same manner as in Reference Example 2. FIG. 13 is a graph showing the results of the charge and discharge test on the battery according to Reference Example 3. In terms of Li reference potentials converted from the InLi reference potentials shown in FIG. 13, Reference Example 3 exhibited a charge reaction potential ranging from 0.38 V to 0.76 V (vs. Li) in the 1st and subsequent cycles and a discharge reaction potential close to 0.82 V (vs. Li).

As demonstrated by the above results, batteries including the first electrode in which an active material layer including an alloy including Bi and Mn is included have improved energy efficiencies, as compared to batteries including the first electrode in which an active material layer free of an alloy including Bi and Mn, for example, an active material layer consisting of BiNi, is included.

In the examples herein, the solid electrolytes used were the halide solid electrolyte Li₃YBr₄Cl₂ and the sulfide solid electrolyte Li₆PS₅Cl. Other common solid electrolytes also promise to exhibit effects similar to those exhibited by the solid electrolytes used above.

### INDUSTRIAL APPLICABILITY

The battery of the present disclosure can be used as, for example, an all-solid-state lithium secondary battery.

## Claims

1. A battery comprising:
a first electrode;
a second electrode; and
an electrolyte layer positioned between the first electrode and the second electrode, wherein
the first electrode includes:
a current collector; and
an active material layer positioned between the current collector and the electrolyte layer, and
the active material layer includes an alloy, the alloy including Bi and Mn.

2. The battery according to claim 1, wherein
the active material layer includes at least one selected from the group consisting of LiBi and LisBi.

3. The battery according to claim 1 or 2, wherein
the active material layer includes BiMn as an active material.

4. The battery according to claim 3, wherein
the BiMn has a crystal structure of space group P63/mmc.

5. The battery according to any one of claims 1 to 4, wherein
the active material layer includes Bi₄Cu₄Mn₃ as an active material.

6. The battery according to claim 5, wherein
the Bi₄Cu₄Mn₃ has a crystal structure of space group Fm-3m.

7. The battery according to any one of claims 1 to 6, wherein
the active material layer is free of a solid electrolyte.

8. The battery according to any one of claims 1 to 7, wherein
the current collector includes Cu.

9. The battery according to any one of claims 1 to 8, wherein
the active material layer is a heat-treated plating layer.

10. The battery according to any one of claims 1 to 9, wherein
the electrolyte layer includes an electrolyte solution.

11. The battery according to claim 10, wherein
the electrolyte solution includes vinylene carbonate as a solvent.

12. The battery according to any one of claims 1 to 9, wherein
the electrolyte layer is a solid electrolyte layer.

13. The battery according to claim 12, wherein
the solid electrolyte layer includes a halide solid electrolyte, and
the halide solid electrolyte is free of sulfur.

14. The battery according to claim 12, wherein
the solid electrolyte layer includes a sulfide solid electrolyte.

15. The battery according to any one of claims 1 to 14, wherein
the first electrode is a negative electrode, and
the second electrode is a positive electrode.

16. A method for producing an electrode, the method comprising:
forming a plating layer on a current collector by electroplating, the plating layer including a Bi plating film and a Mn plating film; and
heating the current collector and the plating layer to obtain an electrode in which an active material layer including an alloy is formed on the current collector, the alloy including Bi and Mn.

17. The method according to claim 16, wherein
the current collector includes Cu.
